(19) Europäisches Patentamt / European Patent Office / Office européen des brevets

(11) **EP 2 587 154 A1**

(12) **EUROPEAN PATENT APPLICATION**

(43) Date of publication:
**01.05.2013 Bulletin 2013/18**

(21) Application number: **12188520.6**

(22) Date of filing: **15.10.2012**

(51) Int Cl.:
*F23N 5/00* (2006.01)          *F01D 21/00* (2006.01)
*G01N 15/02* (2006.01)        *G01J 3/44* (2006.01)
*G01J 3/443* (2006.01)        *G01N 21/31* (2006.01)
*G01N 21/63* (2006.01)

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **24.10.2011 EP 11186292** | (71) Applicant: **Alstom Technology Ltd**<br>**5400 Baden (CH)**<br><br>(72) Inventor: **Haffner, Ken Yves**<br>**5400 Baden (CH)** |

(54) **Method for data acquisition from a combustion process**

(57)     The method for data acquisition from a combustion process that generates hot gases comprises directing a light beam (12) through the hot gases, detecting signals indicative of a scattered beam (15) in a prefixed direction by each hot gas volume (16) through which the light beam (12) passes through, processing the detected signals to ascertain the absorption spectrum of the hot gases, processing the absorption spectrum to obtain data indicative of the combustion process such as the temperature profile.

Figure 1

**Description**

TECHNICAL FIELD

The present invention relates to a method for data acquisition. In particular, the method is useful to ascertain data indicative of the combustion process that occurs is a combustion chamber of a gas turbine.

BACKGROUND

During development and operation of gas turbines, a number of data indicative of the combustion process occurring in the combustion chambers must be collected. For example data include temperature and other data such as pressure, composition, etc.

Usually, temperatures are collected using a thermocouple array that is introduced into the combustion chamber (close to its outlet).

These thermocouple arrays do not guarantee precise measurements, because of the limited number of thermocouples that can practically be provided and of the disturbance to the flow caused by their presence.

In addition, these thermocouple arrays only allow temperature measurements to be carried out and, in order to get measurements of other relevant data, additional appropriate sensors must be provided.

US 2008/0289342 discloses a method for monitoring and controlling a combustion process. According to the method, a laser beam is transmitted from the outer casing of a combustion chamber and is reflected back from the inner casing thereof; this reflected beam is thus detected and processed.

According to this method, cumulative data relating to the whole path between the inner and outer casing can be detected, but no data regarding specific volumes (i.e. specific volumes between the inner and outer casing) can be obtained.

SUMMARY

An aspect of the disclosure includes providing a method by which measurements at specific volumes can be carried out.

Another aspect of the disclosure includes providing a method by which precise measurements can be carried out to obtain, for example, the temperature profile at the combustion chamber exit.

Another aspect of the disclosure is to provide a method that permits measurement of a number of different data (i.e. not only the temperature); for example these additional data include pressure, concentration and composition.

These and further aspects are attained by providing a method in accordance with the accompanying claims.

BRIEF DESCRIPTION OF THE DRAWINGS

Further characteristics and advantages will be more apparent from the description of a preferred but non-exclusive embodiment of the method, illustrated by way of non-limiting example in the drawings, in which:

Figure 1 is a schematic view of a device connected to a gas turbine combustion chamber;
Figure 2 shows a particular of scattered beams directed toward a collimating lens;
Figures 3, 4 show different detector schemes;
Figure 5 shows the wavelength ($\lambda$) - time relationship of one component forming the laser beam;
Figure 6 shows the wavelength ($\lambda$) - time relationship of one component of the scattered beam deriving from the laser beam of figure 5;
Figure 7 shows the absorption (wavelength ($\lambda$) - time relationship) of the medium (hot gases) through which the laser component of figure 5 passes through;
Figure 8 shows the wavelength ($\lambda$) - time relationship of components forming the laser beam;
Figure 9 shows and example of a laser source; and
Figure 10 shows a detail of a laser beam.

DETAILED DESCRIPTION OF EMBODIMENTS

In the following a device for data acquisition is described first.

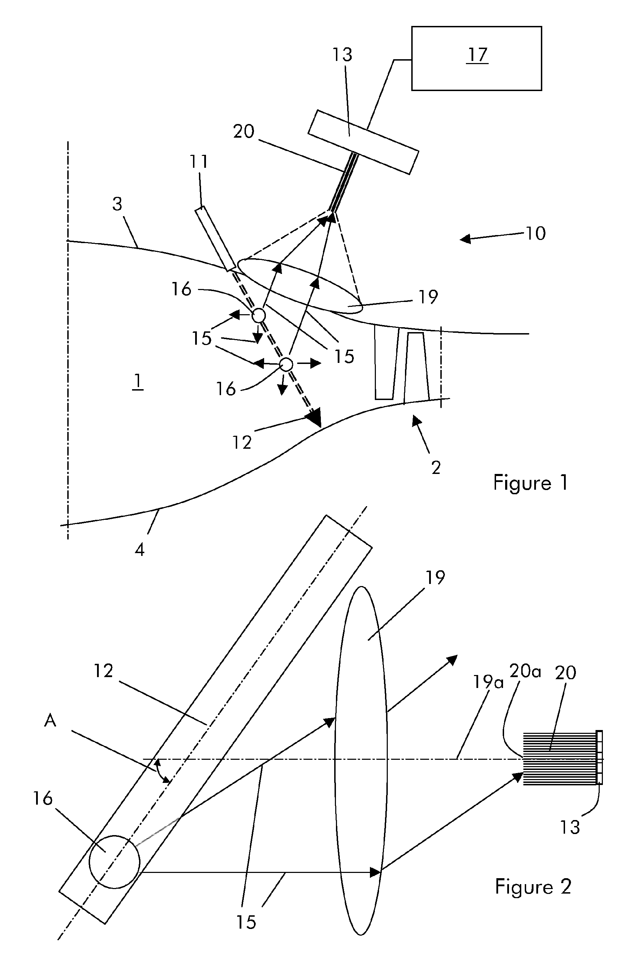

Figure 1 shows a combustion chamber 1 of a gas turbine and a high pressure turbine stage 2 downstream of it. In the combustion chamber 1 air and fuel are injected and combusted generating hot gases that are directed to the turbine stage 2.

The combustion chamber 1 has an outer casing 3 and an inner casing 4; the device 10 is preferably connected to the outer casing 3, anyhow it can also be connected to the inner casing 4.

The device 10 comprises a light beam source 11 (such as a laser source) for directing a light beam 12 through the hot gases generated during the combustion. The wavelength of the light beam source 11 is preferably tuneable.

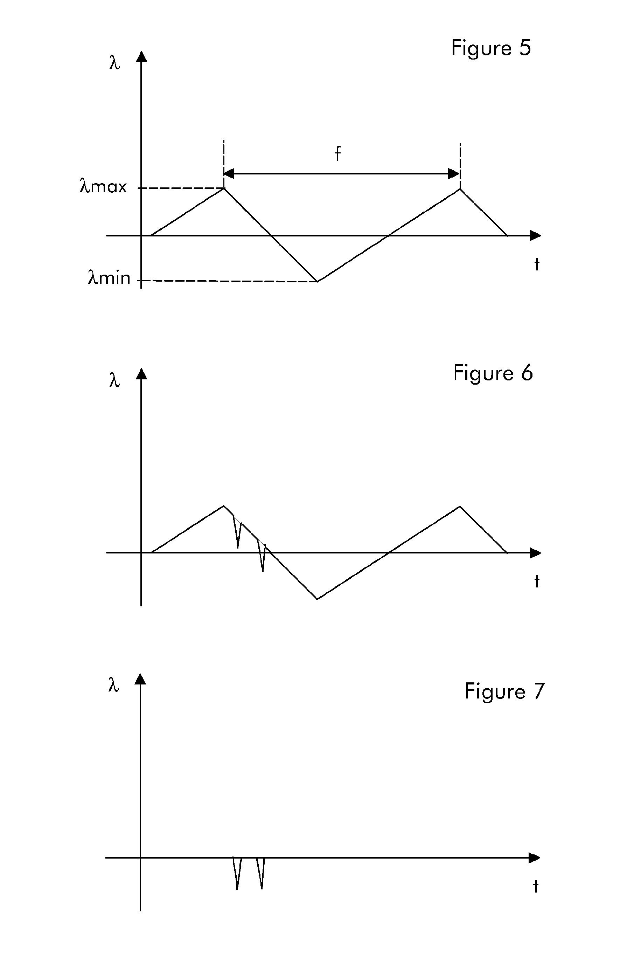

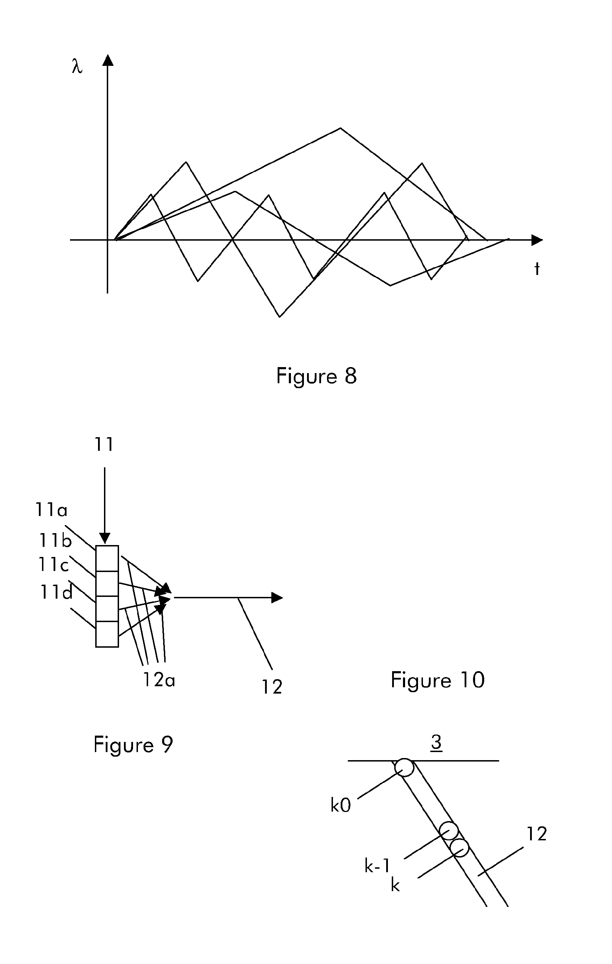

For example the light beam source 11 can include a plurality of laser diodes 11a-d each generating a laser beam 12a at a given frequency (figure 9). Each laser diode operates at a prefixed frequency and is tuneable between a minimum and a maximum wavelength. In this respect, figure 5 shows an example of the radiation emitted by one laser diode that operates at a given frequency f and is tuneable between the wavelengths $\lambda$max and $\lambda$min.

The laser beams 12a generated by each laser diode 11a-d are mixed together to generate the laser beam 12 that is directed into the combustion chamber 1. In this respect figure 8 shows an example of the radiation emitted by a plurality of tuneable laser diodes 11a-d each operating at a given frequency.

Naturally instead of laser diodes any other kind of laser source can be used.

The device 10 also includes one or more detectors 13 of signals indicative of a scattered beam 15 emitted in a prefixed direction by each hot gas volume 16 through which the light beam 12 passes through.

The device 10 also includes a process unit 17 for processing the detected signals, to get the absorption spectrum of the hot gases. The process unit can be a computer and preferably operates according to the heterodyne method.

Advantageously, a collimating lens 19 for selecting the direction of the scattered beam 15 is provided; the collimating lens 19 faces a window in the outer casing 3 and provides the optic signal to the detectors 13; preferably the collimating lens 19 consists of one aspheric lens.

In addition, optic fibres 20 (for example multimode optic fibres) can be provided between the collimating lens 19 and the detector 13 (anyhow this feature is not needed).

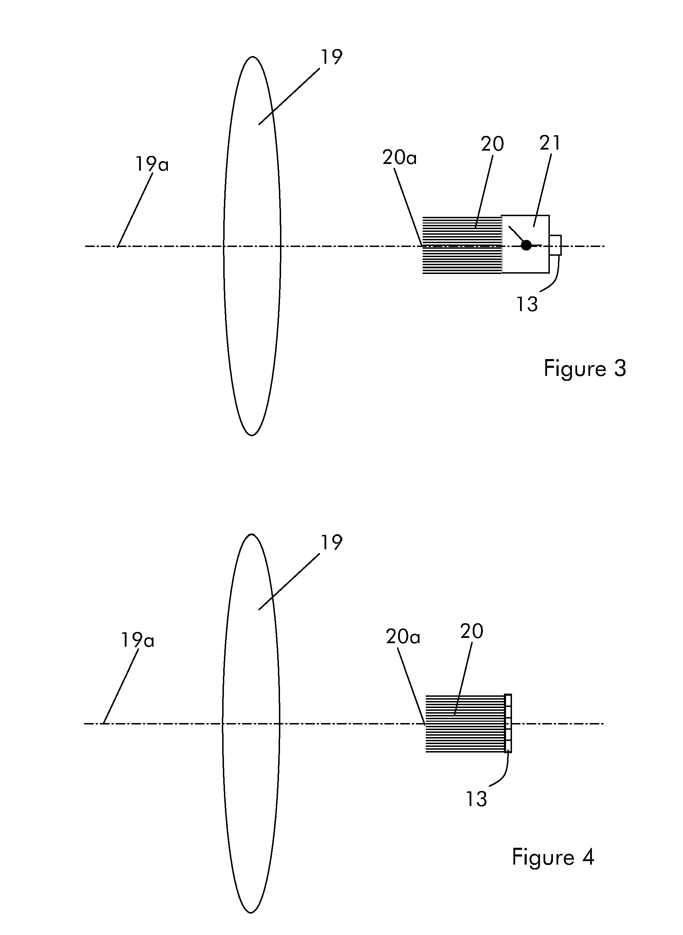

Figure 4 shows an example, in which the optic fibres 20 are connected to an array of detectors 13.

Figure 3 shows another example in which the optic fibres 20 are connected to an optic switch 21 (such as a MEMS device (micro electro mechanical systems) or electro optical modulators or other devices) and thus to one detector 13.

Naturally the schemes of figure 3 and 4 can be used in the same device according to the needs.

Advantageously, when the collimating lens 19 and the optic fibres 20 are both provided, the ends 20a of the optic fibres are located at the focal point of the lens 19. In contrast, when the collimating lens 19 is provided (but the optic fibres 20 are not provided), the detector(s) 13 or the optic switch 21 is located at the focal point of the lens 19.

The operation of the device is substantially the following.

The laser source 11 generates the laser beam 12 (whose features are for example shown in figure 8) that passes through the combustion chamber 1 and the hot gases flowing through it. The laser source 11 is continuously tuned, such that each frequency of the laser beam 12 continuously changes between a given wavelength range (figure 5 shows a single component at a given frequency of the laser beam 12).

When the laser beam 12 passes through each volume 16, it is partly adsorbed by the substances contained in the volume 16 (figure 6 shows the absorption for the component of figure 9).

Then each volume 16 reemits scattered beams 15 in all directions; thus a part of the scattered beams 15 directs toward the lens 19.

When the scattered beams 15 reach the lens 19, only those beams propagating in a direction parallel to the optical axis 19a of the lens 19 pass through the lens 19, enter the optic fibres 20 and reach the detector 13. The scattered beams 15 not propagating in the direction parallel to the optical axis 19a are not focussed on the focus point of the lens 19 where converge the ends 20a of the optic fibres 20 or where the optic switch 21 or detector(s) 13 are located; for this reason they are not detected. Since only scattered beams 15 propagating in a given direction are detected, specific local information can be detected and the temperature profile (or other features) can be reconstructed.

In the embodiment of figure 4 the signals indicative of a scattered beam 15 continuously reach each of the detectors 13 whereas in the embodiment of figure 3 one signal at a time reaches the detector 13.

These signals indicative of a scattered beams 15 are converted into electric signals at the detector(s) 13; these electric signals are thus provided to the process unit 17, that elaborates them (preferably according to the heterodyne method) to separate the frequency component from one another and to reconstruct the absorption spectrum of the hot gases for each volume 16 facing each detector 13 or optic fibre.

Since the wavelength of the laser beam 12 that was emitted is known, it is possible to ascertain the absorption at each frequency and thus it is possible to ascertain the features of the hot gases. Figure 7 shows the absorption of the hot gas at the frequency of the laser component of figure 5.

In the following the method for data acquisition from a combustion process that generates hot gases is described.

The method comprises directing a light beam 12 through the hot gases. Preferably the light beam 12 is a laser beam having one or more components at different frequencies that are preferably tuned between a minimum and a maximum wavelength; these minimum and maximum wavelength can be chosen according to the components of the flue gases that must be detected (for example CO, $CO_2$, NO, $NO_2$, etc).

The method comprises detecting signals indicative of a scattered beam 15 in a prefixed direction having an angle greater than 0° relative to the direction of the light beam (12) for each hot gas volume 16 through which the light beam 12 passes through, and processing the detected signals to get the hot gas absorption spectrum.

The absorption spectrum is thus processed to obtain data indicative of the combustion process, such as temperature and/or pressure and/or composition and/or concentration of selected gas components or also different features. This elaboration is well known in the art (tuneable diode laser absorption spectroscopy, TDLAS).

The light beam 12 is emitted at a prefixed angle A with respect to the optical axis of the lens 19; preferably the prefixed angle A is smaller than 40 degree, larger than 0 degree, and more preferably between 15-25 degree. This permits a compact arrangement to be obtained, it is anyhow clear that also different angles are possible.

Preferably, during detection scattered beams 15 from volumes 16 closer and farther from the detector 13 are detected. During processing data indicative of the combustion process from volumes 16 farther from the light source 11 are calculated on the basis of the data indicative of the combustion process from volumes 16 closer to the light source 11.

In other words, since the laser beam 12 passing through a relevant volume 16 is already partially attenuated (because of the volumes 16 through which it has already passed through), the signal derived from it is indicative of the average of the conditions at the relevant volume 16 and also at all of the other volumes 16 through which the laser beam 12 has already passed through. The actual conditions at the relevant volume k can thus be calculated (naturally the light beam 12 from the first volume adjacent to the casing has no previous absorption and needs no calculation).

For example (figure 10), in case at a volume k-1 a temperature of T=1830 K was calculated and at a volume k a temperature T=1820 K is measured, the actual temperature at the volume k is:

$$1820*2-1830=1810 \text{ K}.$$

If at a volume k0 adjacent to the casing that carries the laser source 11 a temperature of 1830 K is measured; this is actually the temperature at this volume.

According to one embodiment the hot gas volume through which the light beam 12 passes can be virtually divided into discrete hot gas volumes 16 in the direction of the light beam 12. Each discrete hot gas volume 16 can be correlated to a section of the collimating lens 19 and/or to an optical fibre 20 leading to the sensor 13.

This way different data such as the temperature, pressure compositions can be ascertained. In addition, since the data refer to selected volumes within the combustion chamber, also very specific information such as the temperature profile can de ascertained.

For example, in order to ascertain the concentration of a selected gas component, a molecule absorption spectrum for selected molecules can be provided and elaborating the absorption spectrum to get data indicative of the concentration comprises comparing the absorption spectrum to the molecule absorption spectrum.

Naturally the features described may be independently provided from one another.

In practice the materials used and the dimensions can be chosen at will according to requirements and to the state of the art.

REFERENCE NUMBERS

**[0050]**

1 combustion chamber
2 turbine stage
3 outer casing
4 inner casing
10 device
11, 11a-d light source
12, 12a light beam
13 detector
15 scattered beam
16 volume
17 process unit
19 collimating lens
19a optical axis
20 optic fibres
20a end of optic fibres
21 optic switch
f frequency
k, k0, k-1 volumes at different positions
t time
A angle
$\lambda$, $\lambda$max, $\lambda$min wavelength

**Claims**

1. A method for data acquisition from a combustion process that generates hot gases, the method comprising:

   directing a light beam (12) through the hot gases,
   detecting signals indicative of scattered beams (15) in a prefixed direction having an angle greater than 0° relative to the direction of the light beam (12) for each hot gas volume (16) through which the light beam (12) passes through,
   processing the detected signals, ascertaining the absorption spectrum of the hot gases,
   processing the absorption spectrum to obtain data indicative of the combustion process.

2. The method according to claim 1, **characterised by** selecting the prefixed direction of the scattered beam (15) by a lens (19) having an optical axis (19a), wherein the light beam (12) is emitted at a prefixed angle (A) with respect to the optical axis (19a) of the lens (19), the prefixed angle (A) being smaller than 40 degree, preferably larger than 0 degree, and more preferably between 15-25 degree.

3. The method according to claim 1, **characterised in that** detection is carried out via at least a detector (13), wherein during detection scattered beams (15) scattered from volumes (16) closer and farther from the at least a detector (13) are detected, wherein during processing data indicative of the combustion process from volumes (16) farther from the at least a light source (11) are calculated on the basis of the data indicative of the combustion process from volumes (16) closer to the light source (11).

4. The method according to claim 1, **characterised in that** the data indicative of the combustion process includes temperature and/or pressure and/or concentration and/or composition.

5. The method according to claim 4, **characterised by** providing a molecule absorption spectrum for selected molecules, wherein processing the absorption spectrum to ascertain data indicative of the concentration of a selected gas component comprises comparing the absorption spectrum to the molecule absorption spectrum.

6. The method according to claim 1, **characterised in that** the light beam has at least a component at a given frequency that is continuously tuned between a minimum and a maximum wavelength.

7. The method according to claim 1, **characterised in that** the light beam (12) includes a plurality of components each having a given frequency.

8. The method according to claim 1, **characterised in that** the light beam (12) is a laser beam.

9. The method according to claim 1, **characterised in that** the combustion occurs in a gas turbine combustion chamber (1).

Figure 1

Figure 2

Figure 3

Figure 4

Figure 5

Figure 6

Figure 7

Figure 8

Figure 9

Figure 10

**Europäisches Patentamt**
**European Patent Office**
**Office européen des brevets**

# EUROPEAN SEARCH REPORT

Application Number

EP 12 18 8520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/292906 A1 (GIROUARD RAYMOND [US] ET AL) 18 November 2010 (2010-11-18) * paragraphs [0024], [0025], [0034]; figures 2,3 * | 1,4-9 | INV. F23N5/00 F01D21/00 G01N15/02 G01J3/44 |
| X | US 2003/117619 A1 (VO-DINH TUAN [US] ET AL) 26 June 2003 (2003-06-26) * paragraphs [0029], [0033], [0037]; claim 10; figure 4 * | 1,2,4-9 | G01J3/443 G01N21/31 G01N21/63 |
| X | US 4 975 237 A (WATLING ROBERT G W [GB]) 4 December 1990 (1990-12-04) * the whole document * | 1-5,8,9 | |
| X | US 3 446 558 A (SEATON STUART L) 27 May 1969 (1969-05-27) * the whole document * | 1,3-5,8 | |
| X | JP 3 209169 A (MITSUBISHI HEAVY IND LTD) 12 September 1991 (1991-09-12) * abstract; figures 1,2 * | 1,2,5,6, 8,9 | |
| X | US 4 919 536 A (KOMINE HIROSHI [US]) 24 April 1990 (1990-04-24) * claim 21; figures 1-8 * * column 1, line 16 - line 41 * * column 6, line 28 - line 42 * | 1-3,6-9 | TECHNICAL FIELDS SEARCHED (IPC) F23N F01D G01N G01J G01K |
| X,D | US 2008/289342 A1 (SAPPEY ANDREW D [US] ET AL) 27 November 2008 (2008-11-27) * the whole document * | 1,2,4-9 | |
| X,P | EP 2 458 351 A1 (ALSTOM TECHNOLOGY LTD [CH]) 30 May 2012 (2012-05-30) * the whole document * | 1,2,4-9 | |

-/--

The present search report has been drawn up for all claims

| Place of search | Date of completion of the search | Examiner |
|---|---|---|
| Munich | 10 January 2013 | Koch, Rafael |

EPO FORM 1503 03.82 (P04C01)

Europäisches
Patentamt

European
Patent Office

Office européen
des brevets

# EUROPEAN SEARCH REPORT

Application Number

EP 12 18 8520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/013270 A1 (YUMOTO JUNJI [JP] ET AL) 19 January 2006 (2006-01-19) * paragraph [0214] - paragraph [0216]; figure 20 * ----- | 1,4,6-9 | |
| X | US 2001/014436 A1 (LEMELSON JEROME H [US] ET AL) 16 August 2001 (2001-08-16) * paragraphs [0036], [0058]; claim 27; figures 1,2 * ----- | 1,4,8,9 | |
| A | US 2010/313572 A1 (MCMANUS KEITH ROBERT [US] ET AL) 16 December 2010 (2010-12-16) * paragraph [0025] - paragraph [0029] * ----- | 1-9 | |

TECHNICAL FIELDS
SEARCHED      (IPC)

The present search report has been drawn up for all claims

| Place of search | Date of completion of the search | Examiner |
|---|---|---|
| Munich | 10 January 2013 | Koch, Rafael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 18 8520

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2013

| Patent document cited in search report | | Publication date | Patent family member(s) | | Publication date |
|---|---|---|---|---|---|
| US 2010292906 | A1 | 18-11-2010 | EP | 2496813 A2 | 12-09-2012 |
| | | | KR | 20120101049 A | 12-09-2012 |
| | | | US | 2010292906 A1 | 18-11-2010 |
| | | | WO | 2011056193 A2 | 12-05-2011 |
| US 2003117619 | A1 | 26-06-2003 | NONE | | |
| US 4975237 | A | 04-12-1990 | AU | 1297588 A | 10-10-1988 |
| | | | CA | 1316706 C | 27-04-1993 |
| | | | DE | 3871783 T2 | 28-01-1993 |
| | | | EP | 0343187 A1 | 29-11-1989 |
| | | | GB | 2230601 A | 24-10-1990 |
| | | | JP | 2813358 B2 | 22-10-1998 |
| | | | JP | H02502482 A | 09-08-1990 |
| | | | US | 4975237 A | 04-12-1990 |
| | | | WO | 8807179 A1 | 22-09-1988 |
| US 3446558 | A | 27-05-1969 | NONE | | |
| JP 3209169 | A | 12-09-1991 | NONE | | |
| US 4919536 | A | 24-04-1990 | DE | 68924602 D1 | 23-11-1995 |
| | | | DE | 68924602 T2 | 28-03-1996 |
| | | | EP | 0506657 A1 | 07-10-1992 |
| | | | JP | H05504194 A | 01-07-1993 |
| | | | US | 4919536 A | 24-04-1990 |
| | | | WO | 9110143 A1 | 11-07-1991 |
| US 2008289342 | A1 | 27-11-2008 | EP | 1952003 A2 | 06-08-2008 |
| | | | JP | 2009515079 A | 09-04-2009 |
| | | | US | 2008289342 A1 | 27-11-2008 |
| | | | WO | 2007087081 A2 | 02-08-2007 |
| EP 2458351 | A1 | 30-05-2012 | DE | 102011119700 A1 | 14-06-2012 |
| | | | EP | 2458351 A1 | 30-05-2012 |
| | | | US | 2012136483 A1 | 31-05-2012 |
| US 2006013270 | A1 | 19-01-2006 | EP | 1650597 A1 | 26-04-2006 |
| | | | EP | 1986044 A1 | 29-10-2008 |
| | | | JP | 4099192 B2 | 11-06-2008 |
| | | | US | 2006013270 A1 | 19-01-2006 |
| | | | US | 2007297465 A1 | 27-12-2007 |
| | | | WO | 2005012996 A1 | 10-02-2005 |
| US 2001014436 | A1 | 16-08-2001 | NONE | | |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 12 18 8520

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2013

| Patent document cited in search report | Publication date | Patent family member(s) | Publication date |
|---|---|---|---|
| US 2010313572 A1 | 16-12-2010 | CH 701199 A2<br>CN 101956997 A<br>DE 102010017286 A1<br>JP 2010285988 A<br>US 2010313572 A1 | 15-12-2010<br>26-01-2011<br>16-12-2010<br>24-12-2010<br>16-12-2010 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080289342 A